# EUROPEAN PATENT APPLICATION

(11) **EP 0 933 299 A1**
(43) Date of publication of application: **04.08.1999**
(21) Application number: 99100235.3
(22) Date of filing: 08.01.1999
(51) Int. Cl.: B65B 65/02, F16D 3/04

(54) **Transmission for packaging machines for wrapping cigarettes**

(30) Priority: 28.01.1998 IT SV980004
(71) Applicant: SASIB TOBACCO S.p.A., 40128 Bologna (IT)
(72) Inventor: Spada, Valter, 40043 Marzabotto (BO) (IT)
(74) Representative: Karaghiosoff, Giorgio Alessandro, Dipl.-Phys.

(57) **Abstract**

The invention relates to a device for forming the envelope of groups of cigarettes to form an inner and or outer wrapper of the cigarettes, or a so-called forming or wrapping wheel having driving device in which the input shaft (107) is connected to a drive shaft by means of a joint which is a non homokinetic joint for coupling drive shafts (108) with continuous rotary motion with input shafts (107) of transmissions (3) to transform the continuous rotary motion into a rotary motion advancing in steps alternating with dwell periods. According to the invention said joint comprises two degrees of freedom of which one is radial and the other angular between the two parts (110, 410) of the joint that may be coupled to each other and are mounted revolving integral with an output shaft (108) of a drive unit (8) and an input shaft (107) of a transmission (7, 3) respectively transforming the continuous rotary motion into a rotary motion in steps, the said shafts (108, 107) are arranged revolving around their axes (A1, A2) which are oriented parallel among themselves and are radially staggered among themselves..

## Description

The invention relates to a device for forming the envelope of groups of cigarettes to form an inner and or outer wrapper of the cigarettes, or a so-called forming or wrapping wheel, with a driving device comprising a kinematic drive that derives the drive from a drive motor and that transmits motion to a transmission for transforming the continuous rotary motion of the drive motor into a reciprocating motion of the mechanisms of the operating unit consisting of a succession of steps of advancement and periods of dwell.

In particular in the wrapping wheels for forming the cigarette packets, the continuous motion of the main motor is transformed into a reciprocating motion of said wheel. The same is provided with a plurality of housings for the cigarettes and the wrapping material which are moved by the wheel in steps of a preset amplitude from one to the other of a sequence of operating stations for feeding, discharge, folding and/or carrying out any other operation required for the manufacturing process. The steps of advancement are in general angularly equivalent among themselves and the wheel alternates the periods of motion and the periods of dwell. As they are driven by the main motor or by one of the main motors, the steps of advancement are measured based on the angle of rotation of the axis of said main motor and said motor drives different operating units which are driven synchronized between each other. Thus for example the duration of the dwell period and of the period of advancement corresponds to a preset angle of rotation of the main motor.

The dwell periods are necessary to allow for the operation of the individual stations of moving parts to take place, such as feed mechanisms, moving folders and other which need to act on the product in stationary condition

During the period of advancement the wrapping wheel must travel at certain angle of rotation in a given period of time. Therefore the wrapping wheel must be accelerated and subsequently decelerated during the time set for carrying out the step of advancement. This acceleration and deceleration is considerable given the very high effective speeds at which these units operate.

Furthermore, the drive of the wrapping wheels must be so perfectly synchronized with the drive of other mechanism themselves also driven by the motor or by one of the main motors, so that it excludes the possibility to act on the speed of this latter in order to influence the ratio between the length of the dwell period and the length of the period of advancement.

The problem is particularly felt in case of reciprocating mechanisms lacking a cam and in which the advancements or the rotations required for the steps of advancement must be obtained in times set by the geometry. In this case, the times can be of such duration, as to subject the mechanisms driven in steps to prohibitive stresses both for same as well as for the product manufactured . To contain the problem , one must foresee a transmission of the motion that in addition to transforming the continuous rotary motion of the motor shaft into a rotary motion by steps provides to further transform the ratios between the angular motions of the motor shaft relative to the dwell steps and to the steps of advancement. In fact as the angular motion of the motor shaft is the dimension that determines the synchronization of the individual operative units, the speed of the same can not be changed to modify the dynamics of one single operative unit.

The problems afflicting the operative units driven in steps of rotation are substantially due to the considerable speed increase and decrease that for example the wheel has to go through to cover the angular distance in the time provided and the effects on the joint and on the products that in the case of the cigarettes and of the packing materials of the same are considerable.

To provide transmissions of transformation with mechanisms that change the ratio between the angle of rotation of the motor shaft associated with the dwell period and angle of rotation associated with the steps of advancement would in any case require additional moving parts which would increase the mass of inertia to be moved with zero effects on the final result with regards to the problem the invention aims to solve.

The inventions aims at solving this problem in a simple, fast, and low cost manner, by increasing the duration of the step of advancement with reference to the speed of rotation of the main motor and that is without changing the latter and keeping the synchronism unchanged. All thanks to simple, low cost means, easy to manufacture and extremely sturdy and reliable.

The invention attains the above aims with a device of the type described at the beginning, characterized by the fact that a non homokinetic coupling joint is provided between the output shaft of the drive unit or directly of the motor and the input shaft of the transmission for transforming the continuous rotary motion into a rotary motion in steps.

The joint comprises two degrees of freedom of which one is radial and the other angular between two parts of the joint that can be coupled to each other and fitted integral rotary wise with an output shaft of one driving unit and an input shaft of a transmission to transform the continuous rotary motion into a rotary motion in steps respectively, the said shafts are arranged revolving around their axes which are oriented parallel with each other and are staggered with each other.

In a preferred embodiment the joint according to the invention comprises a first part rotary wise integral with the output shaft of the drive unit and which has at least one radial wing on the extremity of said shaft, the said wing carries projecting in direction of the opposite second part of the joint a peripheral roller rotating around an axis parallel to the axis of the drive shaft and a second part of the joint also this one constituted by at least one radial wing provided with a radial channel of engagement in which the roller can slide radially and while it is kept in direction of rotation of the very shafts.

Advantageously the first and the second part of the joint have a further diametrically opposed balancing wing and which can possibly be provided with a counterweight diametrically opposite to the roller and with a seating cavity of radial and circumferential dimensions much larger than the ones of the counterweight and which is foreseen diametrically opposite to the channel of engagement of the roller.

In this latter case, as the radial seating cavity of the roller is larger than the radial channel, the second part of the joint can have counterweight parts on the wing associated with said cavity.

According to a preferred form of execution, the joint has reciprocal coupling means associated one with the extremity of the drive shaft and the other with the extremity of the input shaft of the transmission that transforms the continuous rotary motion into a reciprocal motion with dwell periods interposed between steps of advancement and the said coupling means have two degrees of freedom, while the said two shafts are in a fixed position, are parallel but radially staggered between themselves.
Advantageously a degree of freedom is given with regards to the radial direction and in angular , or circumferential direction.

Advantageously the invention comprises as a transmission for transforming the continuous rotary motion into a rotary motion in steps of advancement a maltese cross or tumbler type transmission, the tumbler being dynamically connected with the input shaft of the transmission and engaging with the maltese cross and the maltese cross being fitted coaxially to the wrapping wheel.

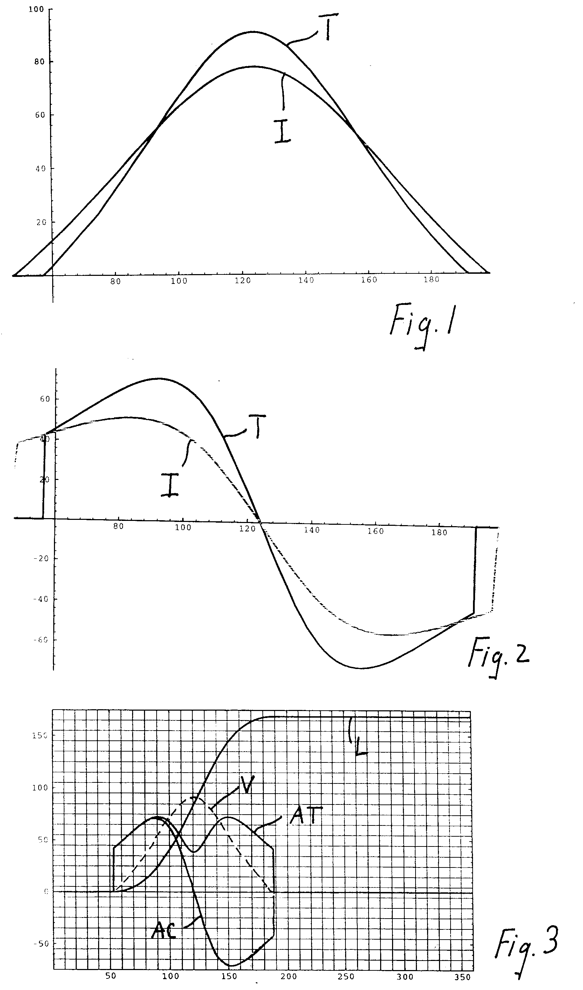

In addition to the extreme simplicity of construction and to the lowest inertia supplied by the joint, the advantages become evident from the following:
In the graphs illustrated in Fig. 1 one curve shows the mechanical stresses to which for example one wrapping wheel is subjected to in presence of a traditional type drive.

Dependent upon the degree of rotation of the axis of the main motor the lengths of the steps of advancement are indicated with L, the progress in speed indicated with V and the acceleration indicated with AT and AC, tangential and total respectively to which the wrapping wheel is subjected. As is evident the accelerations are considerable. The drawbacks are evident for the product which is relatively delicate and which is subjected to massive accelerations and for mechanical condition, in that also the forming wheel has an intertia which involves the necessity to overdimension the drive motor or motors.

The Fig.s 2 and 3 illustrate in an analogous and comparable manner the increase of speed and the progress of acceleration in the case of a traditional construction, with lines indicated with T and in the case of a construction in which the driving means of the wheel are coupled to the actual wheel by means of an non homokinetic joint or to the input shaft of the transmission of reciprocal motion, with lines indicated with I.

From the graphs it becomes evident that the non homokinetic joint allows for lenghtening the time corresponding to the pitch of rotation of the wrapping wheel without changing the speed of rotation of the main motor and reducing the time devoted to the dwell. In this manner are contained both the increase and decrease in the speed of the wrapping wheel as well as the accelerations and decelerations.

This involves great advantages in fact, as evidenced by the graphs shown in the same constructive conditions with a non homokinetic joint, the values of acceleration are approximately seventy times greater than the gravitational ones, while the values of speed surpass the 9 m/s. These values are hard on the product and that is especially for the cigarettes the sudden and repeated handling of which can cause damage, such as partial emptying and/or the deformation of the cigarettes or the compacting of the tobacco. The values of acceleration also result in high torques due to the inertia of the wrapping wheel. A high speed instead has a negative repercussion in that it causes a detrimental grazing of the cigarette wrapping material against the fixed side walls. The force of attrition is in fact correlated to the speed.

With the application of the non homokinetic joint it becomes evident that in the same conditions of construction, providing more time for the execution of the step of advancement of the wheel both the maximum speed as well as the accelerations and decelerations are inferior to the ones in the traditional conditions.

The use of a transmission to transform the continuous rotary motion into a reciprocal motion with dwell periods alternated with steps of advancement allows to reduce considerably the inertial masses in motion of the transmission contributing to the containment of the total mass of inertia to be moved by the operating unit, especially for the wrapping wheel.

The invention has further improvements which are subject of the claims below.

The features of the invention and the advantages derived from them will be better understood from the following description of an executive example illustrated as a non limiting title in the attached drawings, in which:
The Fig. 1 illustrates a graph of the speed of rotation of a wrapping wheel in a cigarette packing machine in which the speeds of the machines without and with a joint according to the invention are reported in connection with the angle of rotation of the main motor.
The Fig. 2 illustrates as graph of the progress of the accelerations and decelerations of a wrapping wheel in a cigarette packing machine in which the speed of machines without and with a joint according to the invention are reported in connection with the angle of rotation of the main motor.
The Fig. 3 illustrates in a single graph the movement in mm of the step of advancement, the speed, the tangential accelerations and the total ones of a wrapping wheel without a joint according to the invention.
The Fig. 4 illustrates a cross section according to a plane parallel to the drive axes and to the one of the wrapping wheel, a unit operating the wrapping of the cigarettes with a joint according to the invention.
The Fig. 5 illustrates in cross section an enlarged detail of the joint according to the invention.
The Fig.s 6 and 7 illustrate a cross section and an axial view of a first part of the joint according to the invention.
The Fig.s 8 and 9 illustrate different views of the second part of the joint according to the invention.
The Fig.s 11 to 14 illustrate the working of the joint according to the invention in different angular positions of the drive shaft.
The Fig. 15 illustrates an axial view over the maltese cross and tumbler type transmission.

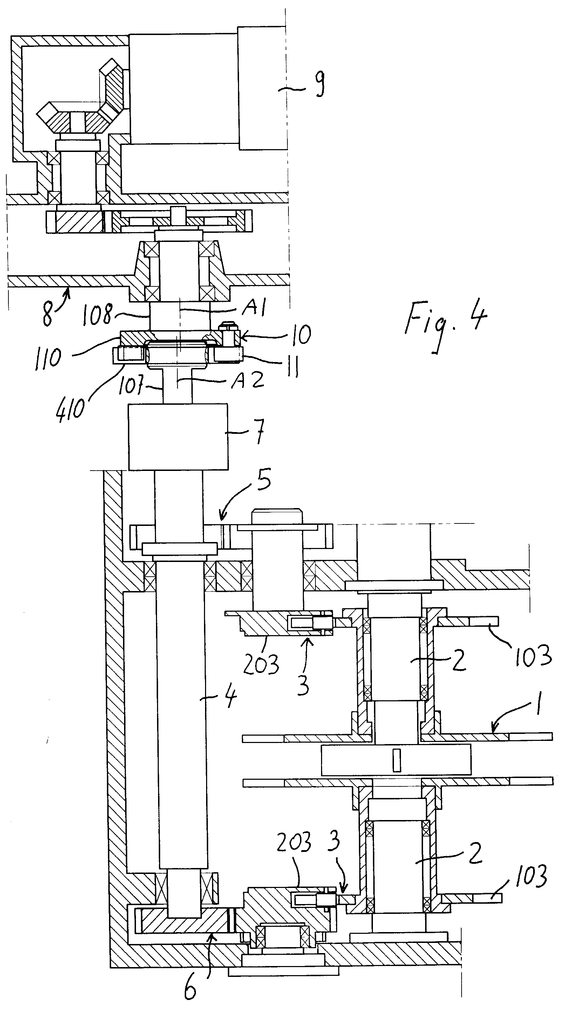

With particular reference to Fig. 4, a cigarette packing machine comprises one wrapping wheel 1 provided with a plurality of cavities for housing groups of cigarettes and the relative wrapping label or blank. The wheel, advancing in rotary steps carries the label or blank together with the groups of cigarettes to different stations in which said label or blank is subjected to the folding and to the wrapping around a group of cigarettes to form a finished packet of cigarettes. In the specific case of the example illustrated it deals with the wheel that wraps around an orderly group of cigarettes a foil label or similar for forming an inner envelope. Similarly it could also deal with a forming wheel that wraps around a group of cigarettes previously wrapped in an inner label in a preceding forming station of the inner envelop, a paper label or a carton blank for forming soft or rigid packets. Obviously this is not to be understood as limiting the aims of the present invention.

The forming wheel 1 is fitted on a stationary axis 2 and is formed by two independend circular parts that are rotary driven each independent from the other but in a perfectly synchronized manner by means of a corresponding transmission 3 constituted by a maltese cross and by a tumbler indicated with 103 and 203 and illustrated in an axial view in Fig. 15.

The tumblers 203 of the two transmissions are driven by a common shaft 4 thanks to an appropriate transmission 5 and 6 and said shaft 4 eventually connects through a further transmission 7 with an output shaft 108 of a drive unit 8 that is driven by the main motor of the machine 9.

The drive unit 8 generally distributes the drive motion thanks to a first kinematic chain to further operating units not illustrated and that tipically cooperate in the cigarette packing machines with the unit illustrated in detail.

The output shaft 107 from the eventual further transmission or directly the shaft 4 couples dynamically with the output shaft 108 of the drive unit 8 thanks to the joint 10.

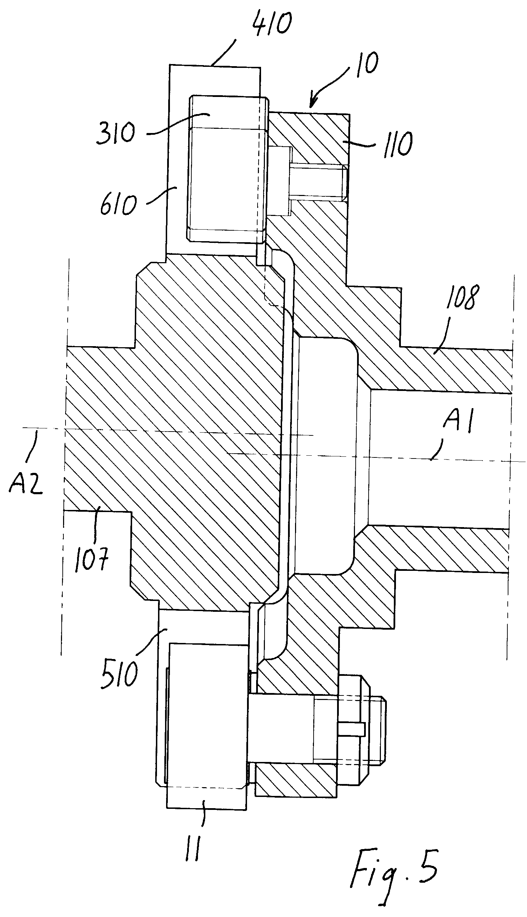

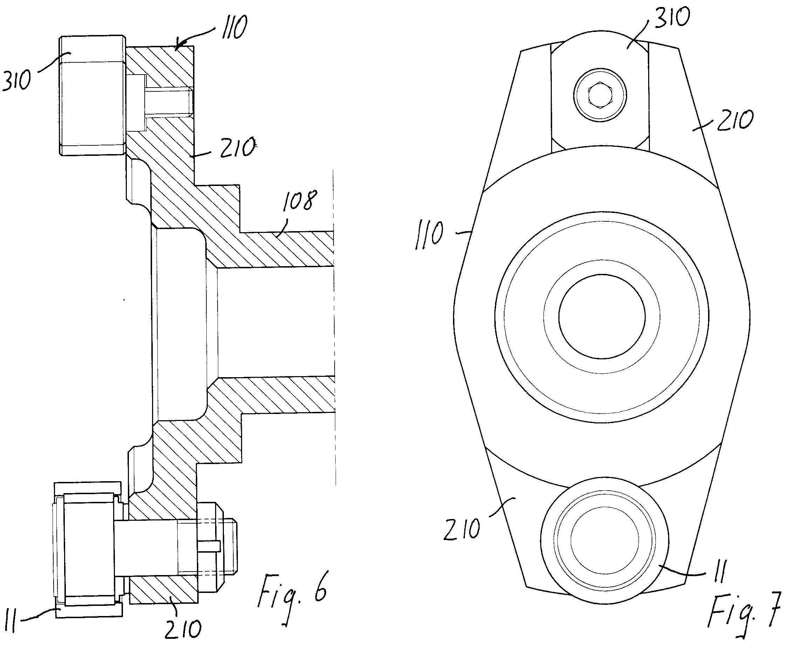

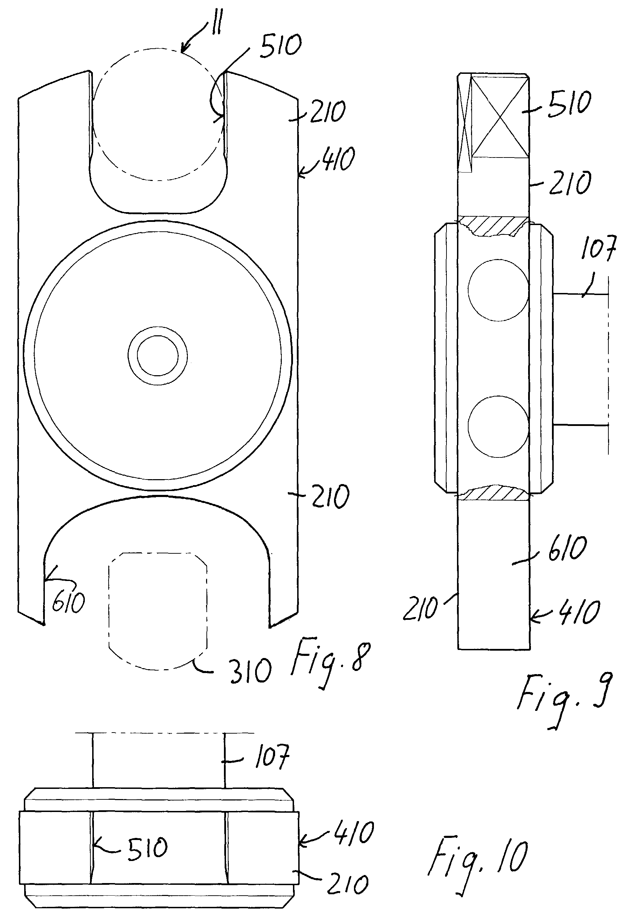

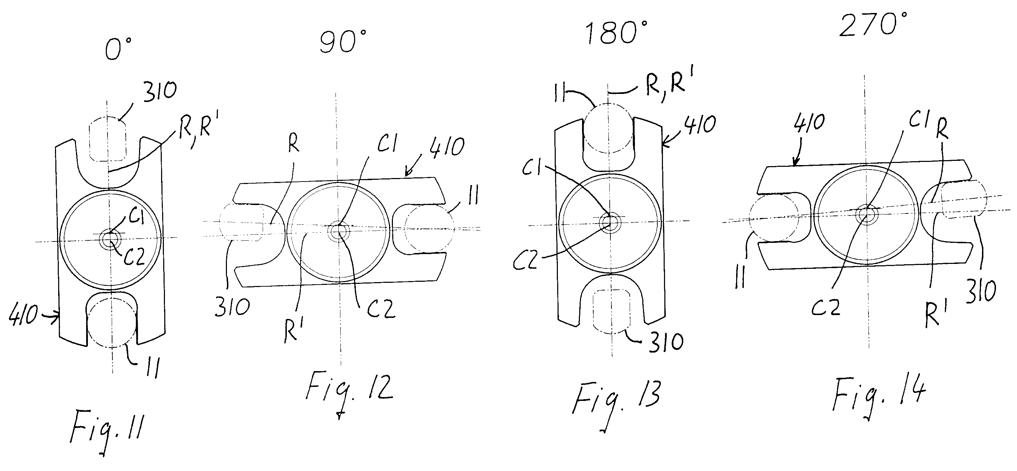

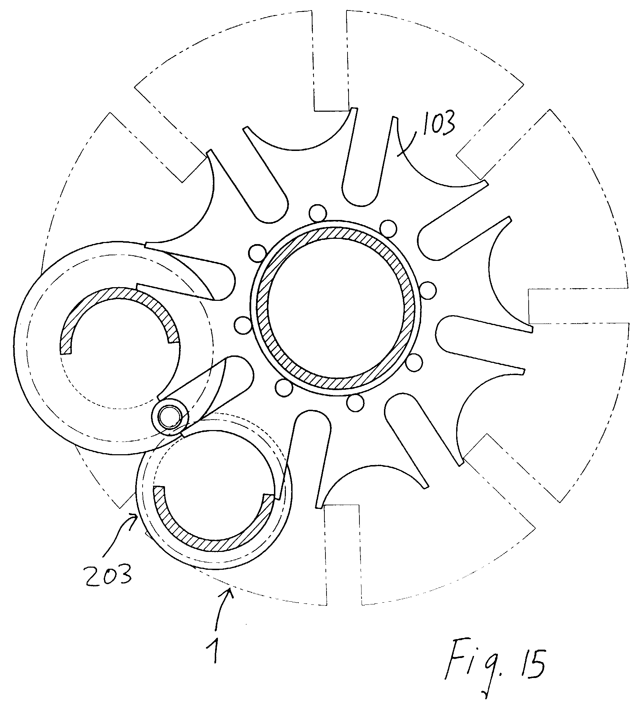

As it is obvious from Fig. 5 the input shaft 107 of the maltese cross transmission 3 and the output shaft 108 of the drive unit 8 are arranged in fixed position and rotating around their axis and with said associated two axes A1 and A2 radially staggered and parallel between each other.

From the Fig.s 5 to 10 the non homokinetic structure of the joint becomes further evident.

A first part of the joint 110 is fixed to the extremity of the output shaft 108 of the drive unit 8 and has two diametrically opposed wings one of which carries projecting in peripheral position and on the coupling side to other part 410 a roller 11 revolving around an axis parrallel to the output shaft 108. The other diametrically opposite wing instead has a counterweight 310 that is used for balancing the part of the joint 110 with regards to the axis of rotation of the output shaft 108 of the drive unit 8.

The second part of the joint 410 is fixed rotary integral on the extremity of the input shaft 107 of the maltese cross type transmission and has two diametrically opposed wings 210 one of which is provided with a radial channel 510 to engage the roller that is with its mean axis aligned with the axis of rotation of the shaft 10. The radial channel 510 is of a length such to allow for the roller to slide in the same compensating the staggering of the two shafts 107 and 108. The other radial wing has instead a cavity 610 in which a counterweight 310 penetrates and which is of a such a width as to allow for the angular staggering of the two parts of the joint 110, 410 and of a length such as to allow the radial staggering of said parts of the joint to compensate for the staggering of the axis of the shafts 107 and 108.

Also in this case, the two radial wings are balanced relative to the axis of rotation of the shaft 107.

The joint according to what explained above has therefore two degrees of freedom one radial for the roller to slide in the channel 510 and the other in angular direction that allows an angular staggering of the two parts of the joint.

The operation of the joint according to the invention is evidenced in the Fig.s 11 to 14. C1 and C2 indicate the two points of the plate through which pass the axes of the hafts 108 and 107. The joint 410 is illustrated in view, while from the first part of the joint 110 the roller 11 and the counterweight 310 that are diametrically opposed are shown sketched, as well as the axis of diametric conjunction R of the two centers of the roller 11 and of the counterweight 310 and which correspond to the mean axis of the part of the joint 110.

In the positions of 0 degrees and 180 degrees of the output shaft 108 of the drive unit 8, also the input shaft 107 of the maltese cross type transmission 3 is rotated into the same position as evidenced by the axis R which coincides with the diametric mean axis of the second part of the joint 410. In these two positions, obviously one has only a radial movement of the roller inside the channel of engagement 510 and of the counterweight 310 inside the throat or cavity 610, in one direction and the other respectively. During the rotation to pass from one to the other of the two positions 0 degrees and 180 degrees, to compensate for the staggering of the two axes as indicated with C1 and C2, the parts of the joint must rotate angularly staggered relative to each other. This is indicated with R and R' in the Fig.s 12 and 14 that illustrate the situation in the angular position of rotation relative to 90 degrees and 270 degrees of the input shaft 107 of the maltese cross type transmission 3. R is the axis of diametric conjunction of the centers of the roller 11 and of the counterweight 310 on the part of the joint 110 associated with the output shaft 108 of the drive unit 8, while R' is the diametric mean axis of the part of the joint 410 associated with the input shaft 107 of the maltese cross type transmission. As evidenced, it so happens that at parity of rotation of the output shaft 108 of the drive unit 8 the input shaft 107 of the maltese cross type transmission 3 covered a lesser angle of rotation and therefore the proportion of the turn angle which is assigned to the period of motion at the expense of the one which is assigned to the period of dwell. In other words, the input shaft 107 reaches the angular starting position in advance with regards to the angular position reached by the output shaft 108 of the drive unit and reaches angular end position of the step of advancement and of start of the dwell period in an delayed angular position with regards to the one of the output shaft 108 of the drive unit 8, starting the complete turn of said output shaft 108 differenrtly on the dwell periods and on the periods of advancement. This determines a greater time for carrying out the step of advancement and therefore lower speeds and lower accelerations and decelerations of the wrapping wheel 12 at equal length of the steps of advancement and without modifying the motion of the output shaft 108 of the drive unit 8, as well as keeping the conditions of synchronization unchanged. This becomes evident by the fact that in the positions of 0 degrees, or 360 degrees, the alignment of the two axes is again precise, in the sense that there is no advance or delay between the two axes.

Thanks to the particular structure of the maltese cross type transmissionm 3 during the dwell period, the torque absorbed is irrelevant and very small, in as much as the only mass in rotation is constituted by the shaft 4 and by the tumblers 203 and eventually by the further intermediate transmission 7.

Naturally, the invention is not limited to what described and illustrated but can be amply varied particularly constructively. The example shown is not to be considered limiting. The inventive concept can be utilized in combination with any operating unit driven in steps and also not only in the cigarette packing machines. All without for this abandoning the informative principle explained above and claimed hereafter.

## Claims

1. Device for forming the envelope of groups of cigarettes to form an inner and or outer wrapper of the cigarettes, or a so-called forming or wrapping wheel, with a driving device comprising a kinematic drive (8) that derives the drive from a drive motor (9) and that transmits motion to a transmission (3, 4, 7) for transforming the continuous rotary motion of the drive motor (9) into a reciprocating motion of the mechanisms (1) of the operating unit consisting of a succession of steps of advancement and periods of dwell, characterized by the fact that a non homokinetic coupling joint (1) is provided between the output shaft (108) of the drive unit (8) or directly of the motor (9) and the input shaft (107) of the transmission (3, 7) for transforming the continuous rotary motion into a rotary motion in steps.

2. Device according to claim 1, characterized in that the non homokinetic joint for coupling drive shafts (108) with continuous rotary motion to input shafts (107) of transmissions (3) for transforming the continuous rotary motion into steps of advancement alternating with periods of dwell comprises two degrees of freedom of which one is radial and the other angular between two parts (110, 410) of the joint (10) that may be coupled to each other and fitted rotating integral with regards to the output shaft (108) of a drive unit (8) and an input shaft (107) of a transmission (7, 3) for transforming the continuous rotary motion into a rotary motion in steps, the said shafts (108, 107) are arranged revolving around their axes (A1, A2) which are oriented parallel between each other and that are radially staggered between each other.

3. Device according to claim 1 or 2, characterized in that the joint comprises a first part (110) rotary integral with the output shaft (108) of the drive unit (8) and that has at least one radial wing (210) on the extremity of the said shaft (108), the said wing carries a peripheral roller (11) projecting in direction of the second part (410) of the joint (10), rotating around an axis parallel to the axis of the drive shaft (108) and a second part (410) of the joint (10) the same also constituted by at least one radial wing (210) provided with a radial channel of engagement (510) in which the roller (11) may slide radially and is kept in the circumferential sense of rotation of the very joint (10).

4. Device according one or more of the preceding claims characterized by the fact that the first (110) and the second part (410) of the joint (10) have a further balancing wing (210) diametrically opposite to the roller (11) and that can eventually be provided respectively with a counterweight (31) diametrically opposite to the roller (11) and with a housing cavity (610) of radial and circumferential dimensions much greater than the ones of the counterweight (310) and that is arranged diametrically opposite to the channel (51) of engagement for the roller (11) in the second part (410) of the joint.

5. Device according to one or more of the preceding claims, characterized by the fact that since the cavity (610) in the second part (410) of the joint for radially housing the counterweight (310) is larger than the radial channel (510) for the roller (11), the second part of the joint (410) may have counterweight parts on the wing ( 210) associated with the said cavity (610).

6. Device according to one or more of the preceding claims, characterized by the fact that the joint (10) has reciprocal coupling means (11, 510) one connected to the extremity of the drive shaft (108) and the other to the input shaft (107) of the transmission (3, 7) that transforms the continuous rotary motion into an alternating motion with dwell periods interposed between steps of advancement and the said coupling means (11, 510) have two degrees of freedom, while the said two shafts (107, 108) are fixed in position, are parallel but are arranged with their axes (A1, A2) staggered in radial direction between each other.

7. Device according to one or more of the preceding claims, characterized by the fact that one degree of freedom is relative to the radial direction and the other to the angular direction, or circumferential.

8. Device according to one or more of the preceding claims, characterized by the fact that as a transmission of transformation of the continuous rotary motion into a rotary motion in steps of advancement a maltese cross type transmission (3, 103, 203) and tumbler is provided, the tumbler being dynamically connected (4, 5, 6) with the input shaft (107) of the transmission engaging with the maltese cross (103).

9. Device according to one or more of the preceding claims, characterized by the fact that the operating unit with operation in steps 1 is constituted by a revolving mechanism, such as a wheel or similar and the maltese cross (203) being coaxially fixed to the same in a rotary integral manner.

10. Device according to one or more of the preceding claims, characterized by the fact that between the output shaft (108) of the drive unit (8) and the input shaft (107) of the maltese cross type transmission and tumbler (3) a joint (10) is provided according to one or more of any of the preceding claims 1 to 6.

11. Device according to one or more of the preceding claims, characterized by the fact that a complete revolution of the drive shaft (108) determines a dwell period and a step of advance of the operating unit (1), as the drive shaft (108) and the input shaft (107) of the transmission for transforming the continuous rotary motion into a rotary motion in steps are radially staggered between each other in a dimension and direction such, that the input shaft (107) of the transmission (3) for transforming the continuous rotary motion into a rotary motion in steps reaches in advance the angular start position of the step of advancement and in delay the one of the end of the step of advancement and start of the dwell period, with reference to the drive shaft (108), lengthening the time of the dwell period.
